(19) Europäisches Patentamt
European Patent Office
Office européen des brevets

(11) EP 1 990 560 A2

(12) **DEMANDE DE BREVET EUROPEEN**

(43) Date de publication:
**12.11.2008 Bulletin 2008/46**

(51) Int Cl.:
**F16H 59/02** *(2006.01)*

(21) Numéro de dépôt: **08305156.5**

(22) Date de dépôt: **07.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **10.05.2007 FR 0754982**

(71) Demandeur: **Dura Automotive Systems SAS 91570 Bièvres (FR)**

(72) Inventeur: **Durand, Eric 78430 LOUVECIENNES (FR)**

(74) Mandataire: **Thivillier, Patrick Cabinet Laurent & Charras 3 Place de l'Hôtel de Ville B.P. 203 42005 Saint-Etienne Cédex 1 (FR)**

(54) **Dispositif de commande d'une boîte de vitesses pilotée pour vehicule automobile**

(57) La boite de vitesses est assujettie à un calculateur et à une unité de contrôle électroniques pour passer, à volonté, d'un mode manuel selon lequel on monte ou on descend les vitesses en agissant sur un organe de manoeuvre (P1) - (P2), à un mode automatique pour l'engagement des positions Park (P), Reverse (R), Neutre (N), Drive (D) au moyen dudit organe.

Le dispositif comprend des moyens assujettis audit organe de manoeuvre (P1) - (P2), pour permettre, d'une part, de sélectionner le mode manuel ou le mode automatique à partir dudit organe (P1) - (P2), sous l'effet de simples impulsions exercées sur ledit organe et, d'autre part, dans le mode de fonctionnement sélectionné, déterminer les différents états toujours sous l'effet de simples impulsions à savoir, pour le mode manuel, monter et descendre des vitesses et, pour le mode automatique, engagement des positions (P), (R), (N), (D).

Fig. 1

EP 1 990 560 A2

**Description**

L'invention se rattache au secteur technique des moyens de commande d'une boîte de vitesses, notamment de véhicule automobile.

Plus particulièrement, l'invention concerne la commande d'une boîte automatique pilotée ou d'une boîte manuelle pilotée ou d'une boîte CVT pilotée. On désignera ci-après, dans la suite de la description, par le terme générique boîte pilotée l'une quelconque de ce type de boîte de vitesses.

Actuellement, la commande des boîtes pilotées s'effectue soit par un levier seul, connu également sous le nom de joystick, soit par la combinaison d'un levier et de palettes associées au volant.

Dans le cas d'un levier seul, ce dernier permet de passer d'un mode manuel à un mode automatique. En mode manuel, les impulsions exercées sur le levier dans un sens (+) ou dans l'autre (-) permettent d'assurer la montée ou la descente des vitesses. En mode automatique, le levier est susceptible d'occuper les différentes positions correspondant notamment à la position Park (P), la position Reverse (R), la position Neutre (N), la position Drive (D).

Lorsque le levier est associé à des palettes, ce dernier permet de passer uniquement du mode manuel au mode automatique. En mode manuel, les vitesses sont passées par des impulsions exercées sur les palettes disposées, par exemple, de part et d'autre de la colonne de direction. Par exemple, la palette de droite permet la montée des vitesses (+) et la palette de gauche la descente des vitesses (-). Ou bien, dans chacune des branches du volant, sont montées des palettes avec, pour chacune d'elles, une position (+) et une position (-). En mode automatique, le levier peut occuper les différentes positions indiquées précédemment, après avoir sélectionné l'état choisi (P), (R), (N) ou (D).

Quelle que soit la solution choisie, il est nécessaire d'avoir un réel déplacement du levier pour les sélections (P), (R), (N) ou (D). Un tel déplacement génère un certain encombrement et par conséquent une perte d'espace au niveau du poste de pilotage.

Une solution de ce type ressort de l'enseignement du brevet EP 1.180.618. Ce brevet concerne un dispositif sélecteur de vitesse pour une transmission automatique qui permet de sélectionner facilement les vitesses et qui permet de sélectionner en même temps un mode de fonctionnement particulier de la transmission automatique. Selon l'enseignement de ce brevet, un premier levier est mobile entre une première position de repos et une première et seconde positions de fonctionnement, avec un mouvement de rotation et selon une première direction angulaire pour commander une vitesse supérieure à la vitesse engagée dans la boîte de vitesses. Un second levier, également mobile entre une position de repos et une première et seconde positions de fonctionnement, permet de commander une vitesse inférieure à la vitesse engagée dans ladite boîte de vitesses.

L'invention s'est fixée pour but de remédier à ces inconvénients d'une manière simple, sûre, efficace et rationnelle.

Le problème que se propose de résoudre l'invention est de pouvoir sélectionner le mode manuel et le mode automatique à partir d'un même point de commande, à partir de simples impulsions.

Pour résoudre un tel problème, il a été conçu et mis au point un dispositif de commande d'une boîte de vitesses pilotée pour véhicule automobile assujettie à un calculateur et à une unité de contrôle électroniques pour passer, à volonté, d'un mode manuel selon lequel on monte ou on descend les vitesses en agissant sur un organe de manoeuvre, à un mode automatique pour l'engagement des positions Park, Reverse, Neutre, Drive au moyen dudit organe..

Selon l'invention, le dispositif comprend des moyens assujettis audit organe de manoeuvre, pour permettre, d'une part, de sélectionner le mode manuel ou le mode automatique à partir dudit organe, sous l'effet de simples impulsions exercées sur ledit organe et, d'autre part, dans le mode de fonctionnement sélectionné, déterminer les différents états toujours sous l'effet de simples impulsions à savoir, pour le mode manuel, monter et descendre des vitesses et, pour le mode automatique, engagement des positions Park, Reverse, Neutre, Drive.

Avantageusement et pour résoudre le problème posé de libérer totalement l'espace au niveau du poste de pilotage et en évitant au conducteur d'ôter les mains pour changer de mode, l'organe de manoeuvre est constitué par des palettes (+) et (-) disposées au niveau du volant.

Sans pour cela sortir du cadre de l'invention et dans une forme de réalisation, l'organe de manoeuvre est constitué par un levier (+) et (-).

L'organe de manoeuvre peut être combiné avec un bouton permettant de sélectionner le mode manuel ou le mode automatique. L'organe de manoeuvre peut également être combiné avec un bouton permettant de verrouiller ou non la position Park.

Selon un mode d'exécution, le dispositif comprend un microcontrôleur présentant quatre entrées analogiques ou tout ou rien pour acquérir les signaux de bouton Manuel/Automatique et verrouillage/déverrouillage et de gérer l'ordre d'apparition des impulsions sur l'organe de manoeuvre et de gérer une sortie PWM, et un oscillateur via RC interne.

Comme il sera indiqué dans la suite de la description, différents modes d'acquisition des données, pour réaliser les différentes fonctions recherchées, pour sélectionner un des modes et pour rechercher, pour chacun d'eux, les différents états souhaités, peuvent être envisagées.

L'invention est exposée ci-après plus en détail à l'aide des figures des dessins annexés dans lesquels :

- la figure 1 est une vue à caractère schématique du principe de réalisation du dispositif de commande sous forme de palettes (+) et (-), assujetties notamment à un bouton pour passer du mode automatique au mode manuel et inversement, lesdites palettes permettant, en fonction du mode choisi, soit le passage des vitesses (montée et descente en mode manuel), soit sélection des différentes position Park, Reverse, Neutre, Drive, en mode automatique ;
- la figure 2 montre le schéma de principe du dispositif ;
- la figure 3 est un schéma fonctionnel lorsque le mode Park est en position (-2) ;
- la figure 4 est un schéma fonctionnel lorsque le mode Park est en position 0 et sans bouton de verrouillage et déverrouillage ;
- la figure 5 est un schéma fonctionnel lorsque le mode Park est en position (0) avec bouton de verrouillage et déverrouillage ;
- la figure 6 est un schéma fonctionnel du passage du mode automatique en manuel, et inversement, sans bouton indépendant ;
- la figure 7 est un schéma fonctionnel de la sélection du mode manuel automatique, sans bouton indépendant et avec un appui long ;
- la figure 8 est un schéma d'architecture véhicule possible, selon l'invention, la sélection des modes automatique avec les positions (P), (R), (N), (D) et manuel avec les rapports de vitesses correspondant via les palettes ;
- la figure 9 montre un exemple de réalisation pour modifier la tension analogique de l'unité de contrôle traitant l'information palettes ;
- la figure 10 est un algorithme de la stratégie d'acquisition de l'information palette (+) et palette (-) (dans cet algorithme, le signal électrique des palettes est analogique);
- la figure 11 est un autre type d'algorithme avec un signal électrique tout ou rien;
- la figure 12 montre un exemple de réalisation de gestion des appuis palettes.

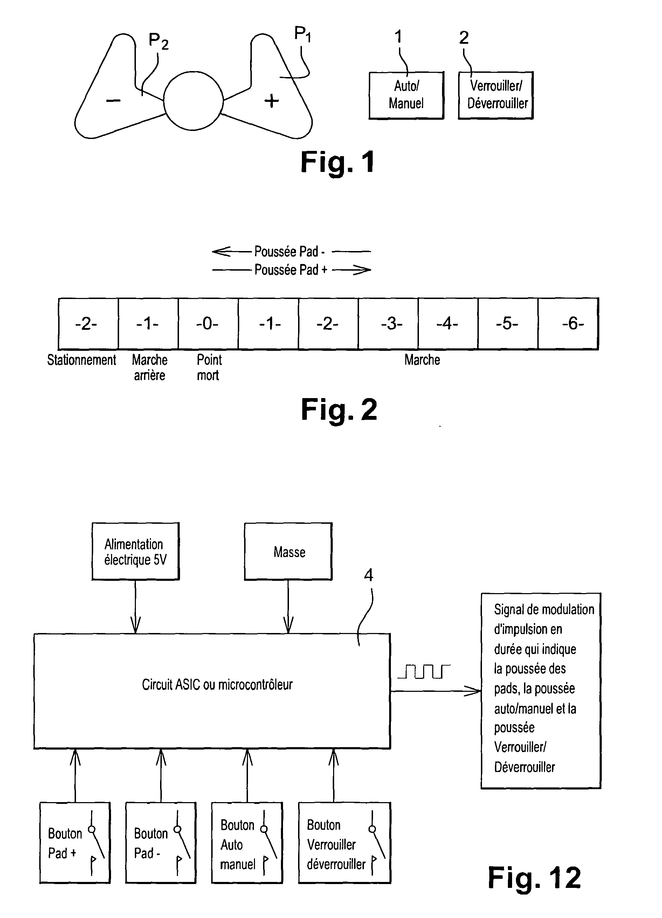

On a illustré à la figure 1 un exemple de réalisation du dispositif de commande selon l'invention comprenant, à la base, un système de palettes (+) (P1) et de palettes (-) (P2), un bouton automatique/manuel (1) et un bouton verrouillage/déverrouillage (2). Le bouton (1) permet de sélectionner le mode automatique ou le mode manuel. Comme il sera indiqué dans la suite de la description, ce bouton (1) est optionnel mais n'est pas indispensable pour changer de mode. Il en est de même en ce qui concerne le bouton verrouillage/déverrouillage (2) qui permet de verrouiller la chaîne de traction du véhicule via le doigt de parking (correspond à la position park). A noter qu'un appui sur ce bouton (2) permet, en position Neutre, d'aller dans la position Park (P). En mode automatique, un appui sur les palettes (P1) et/ou (P2) permet de sélectionner une position Park (P), Reverse (R), Neutre (N), Drive (D). En mode manuel, la palette (P1) permet de monter les vitesses (rapport en marche avant), tandis que la palette (P2) permet de descendre les vitesses.

On renvoie au schéma de principe illustré figure 2, où en mode automatique, la position (-2) correspond à la sélection Park (P), la position (-1) à la sélection Reverse (R), la position (0) à la sélection Neutre (N), et une position 1, 2, 3, 4, 5, 6 par exemple à l'une quelconque des positions Drive possible.

Un appui sur la palette (-) permet de changer de rapport et de mode suivant le précédent rapport ou mode engagé. Par exemple, si (D1) est engagé un appui sur la palette (-) permet d'engager la position Neutre (N). Un appui sur la palette (+) permet de changer de rapport et de mode suivant le précédent rapport ou mode engagé. Par exemple, si la position Reverse est engagée, un appui sur la palette (-) permet d'engager la position Neutre (N).

Différentes stratégies peuvent être envisagées pour l'engagement et le désengagement de la position Park (P) et de la sélection du mode manuel en automatique, et inversement.

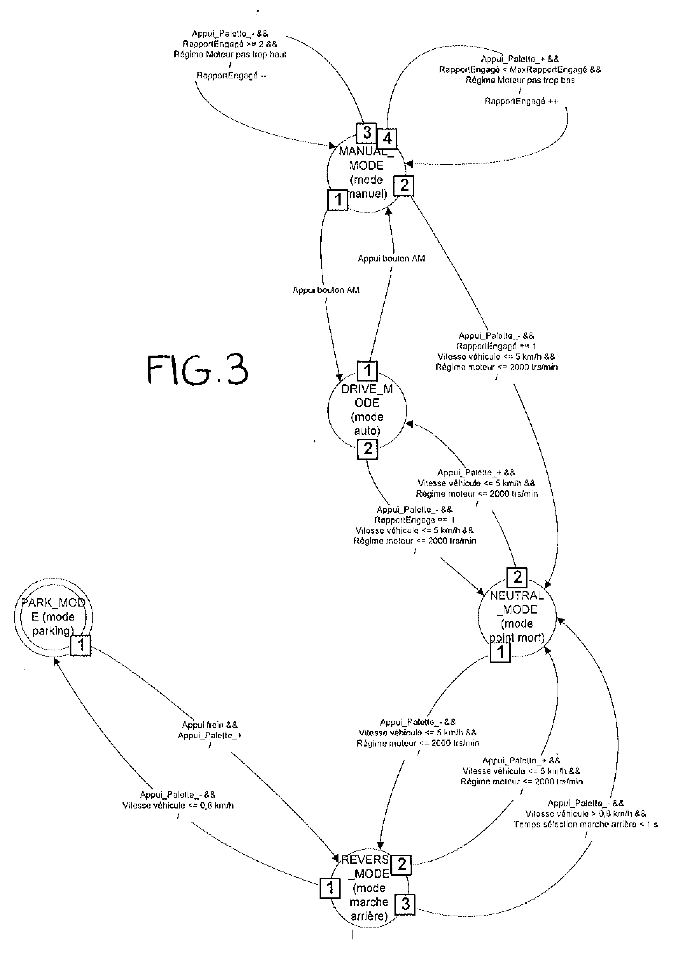

On renvoie aux figures 3, 4 et 5 qui montrent différents principes d'engagement/désengagement de la position Park.

A la figure 3, l'état (-2) correspond à la position boîte pilotée en Park. L'état (-1) correspond à la position boîte pilotée en Reverse (R). L'état (0) correspond à la position boîte pilotée en Neutre (N). Les états (D1 à Dn) correspondent à la position boîte pilotée en Drive avec de 1 à n rapport sélectionné. La sélection du mode manuel en mode automatique s'effectue par l'intermédiaire du bouton (1). Pour passer du mode Neutre (N) au mode Drive (D), un appui sur la palette (+) suffit. Inversement, pour passer du mode Drive (D), avec un premier rapport engagé (D1), au mode Neutre, un appui sur la palette (-) suffit. Un double appui sur la palette (-) permet l'engagement de l'état Park à partir de l'état Neutre. Cet engagement est possible sous réserve des conditions de vitesse du véhicule, par exemple inférieur ou égal à 0,8 km/heure.

L'engagement de l'état Park est également possible dans les autres positions. Par exemple, cet engagement peut être effectué de la position Reverse (R) avec un seul appui sur la palette (-), là encore, sous réserve d'une condition de vitesse du véhicule, comme précédemment, inférieure ou égale à 0,8 km/heure.

Le désengagement de l'état Park est réalisé par un ou plusieurs appuis sur la palette (+), combiné(s) avec un appui sur le frein. Ces dispositions évitent un désenclenchement de la position Park non voulu pouvant entraîner un déplacement du véhicule.

Dans cette configuration, il n'est pas nécessaire de disposer du bouton de verrouillage/déverrouillage (2).

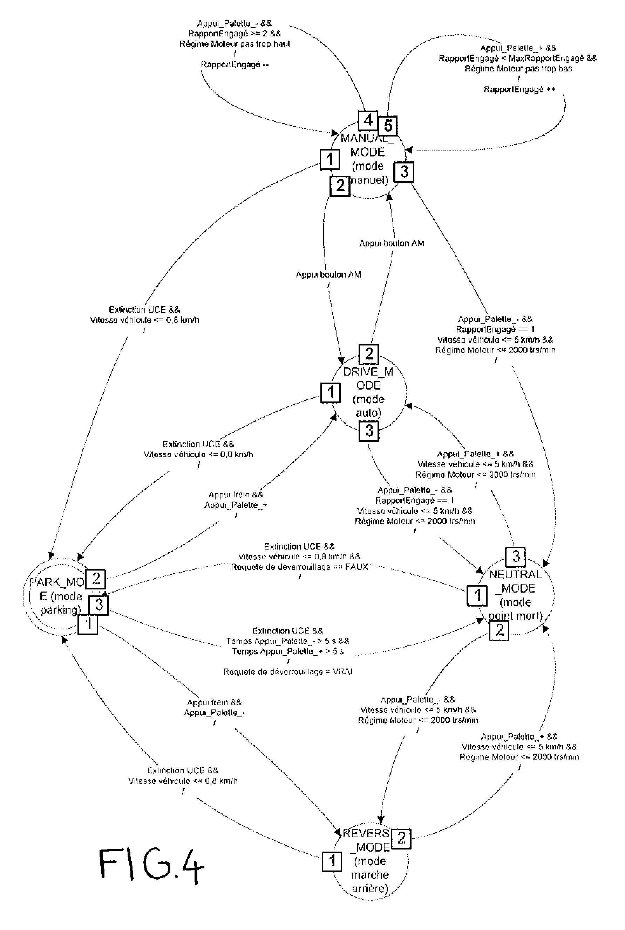

A la figure 4, l'état Park (P) correspond à la position (0). Comme précédemment, le changement du mode automatique en mode manuel, et inversement, s'effectue par l'intermédiaire du bouton (1). L'état (-1) correspond à la position boîte pilotée en Reverse (R). L'état (0) correspond à la position boîte pilotée en position Neutre (N) (ou Park (P)). L'état D1 à Dn correspond à la position boîte piloté en Drive avec l'un quelconque des rapports (1 à n) sélectionné.

L'engagement de l'état Park est effectué à l'extinction du véhicule avec maintien de l'unité de contrôle électronique (UCE) gérant la boîte pilotée. Un appui continu sur la palette (+) et la palette (-) pendant l'extinction, permet de positionner la boîte à l'état Neutre (N). Cette fonction, uniquement disponible pendant la phase d'extinction, a pour but de ne pas verrouiller la chaîne de traction et donc de laisser la possibilité de tracter le véhicule pour un dépannage par exemple. Pour désenclencher la position Park, il convient soit d'appuyer sur le frein et d'appuyer sur la palette (-) (la boîte passe à (-1)) (Reverse), ou bien d'appuyer sur le frein et d'appuyer sur la palette (+), la boîte passe en (D1) (Drive et premier rapport engagé).

Comme précédemment, avec cette solution, il n'est pas nécessaire de disposer du bouton verrouillage/déverrouillage (2). A noter que l'état Park ne peut être engagé que lorsque le moteur du véhicule est entraîné (moteur thermique à l'état tournant).

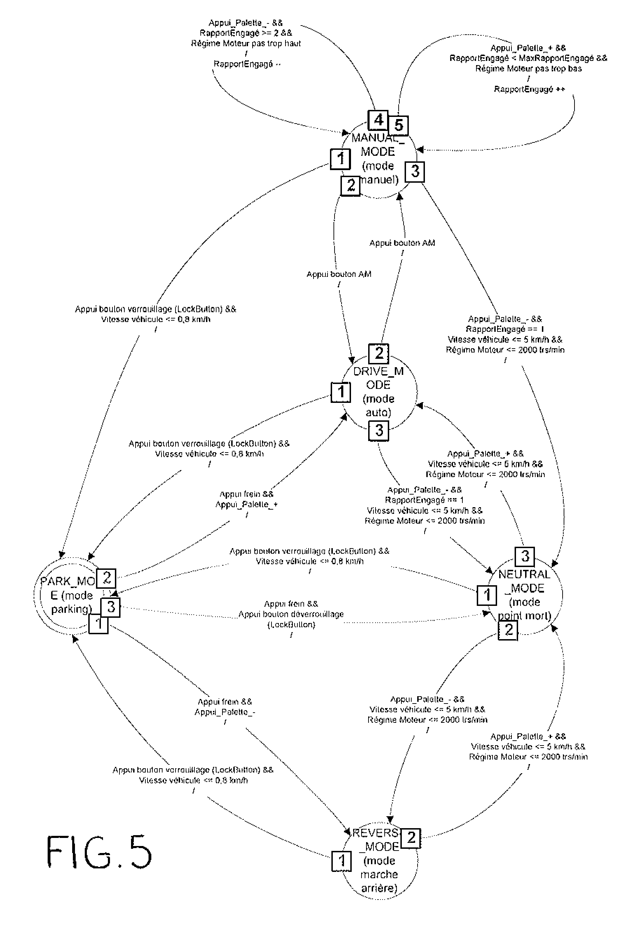

A la figure 5, l'état Park est en position (0) avec utilisation du bouton verrouillage/déverrouillage (2). Ces dispositions permettent d'engager l'état Park (P), même lorsque le moteur du véhicule tourne. Pour l'engagement de l'état Park, les conditions cumulatives suivantes doivent être réunies : appui sur bouton verrouillage/ déverrouillage (2), et condition de vitesse permettant l'engagement sur Park (par exemple, vitesse inférieure ou égale à 0,8 km/heure). Il pourra être ajouté comme condition : « boîte pilotée en position N » si l'on veut interdire le verrouillage de la chaîne de traction alors que le véhicule est en marche avant ou marche arrière.

Le désenclenchement de l'état Park s'effectue par un appui sur le frein et un appui sur la palette (-) (la boîte passe en (-1) en état Reverse), ou bien appuie sur le frein et appuie sur le bouton verrouillage/déverrouillage (2) (la boîte passe en (0) à l'état Neutre, ou bien appuie sur le frein et appuie sur palette (+) (la boîte passe en (1) en état Drive et premier rapport engagé).

Il en résulte, selon ces dispositions, que la position (0) (Neutre) peut être verrouillée par l'intermédiaire du bouton (2) et, par conséquent, d'aller en position Park (P).

Il est à noter également que le déverrouillage de park permettant d'aller en N est optionnel : dans ce cas le bouton verrouillage/déverrouillage (lock/unlock) sera limité à la fonction verrouillage (lock). Ce qui entraîne la suppression de la transition de l'état « Park_Mode » à l'état « Neutral_Mode ».

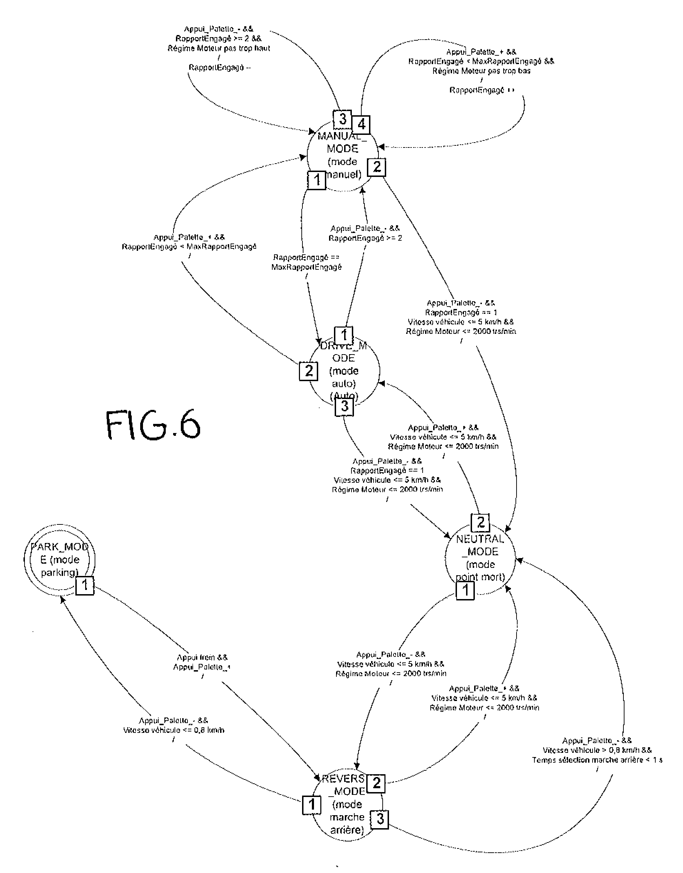

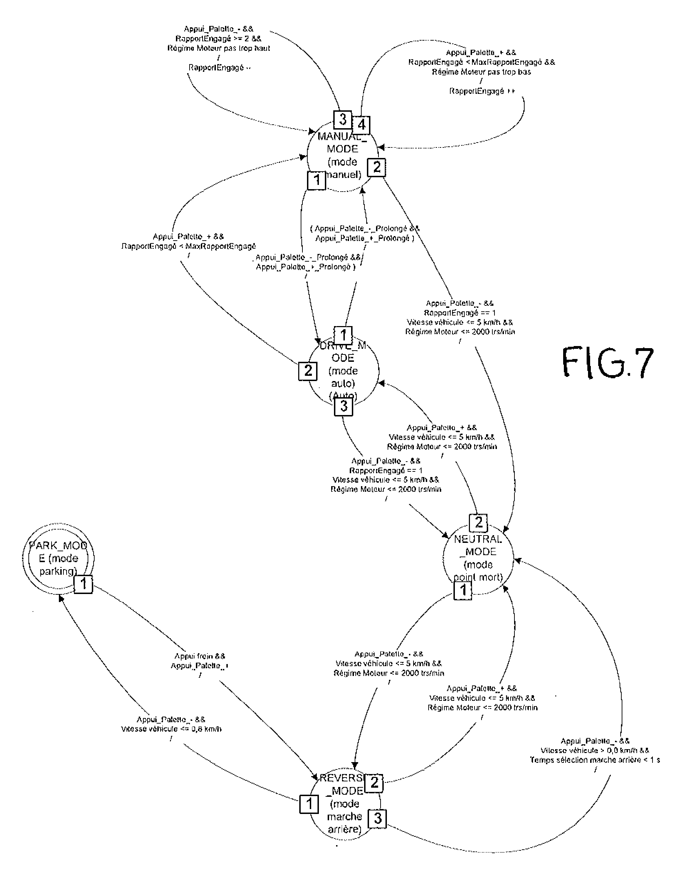

La sélection du mode manuel en mode automatique, et inversement, peut également être effectuée sans l'utilisation du bouton (1) (figures 6 et 7).

A la figure 6, ce passage du mode automatique au mode manuel se réalise dès qu'il y a un appui palette cohérent, tant que la boîte pilotée se trouve en état Drive (D). La boîte reste en mode manuel tant que le conducteur ne sélectionne pas le dernier rapport de la boîte, (D6) par exemple. Dans ce cas, la boîte repasse dans le mode automatique. Avec cette forme d'exécution, le conducteur est toujours en mode automatique et si jamais il appuie sur la palette lorsqu'il veut rétrograder ou augmenter un rapport, la boîte passe automatiquement en mode manuel. Le seul moyen de repasser en mode automatique est possible lorsque l'on atteint le dernier rapport.

A la figure 7, le passage du mode automatique au mode manuel s'effectue dès qu'il y a un appui palette long et simultané sur les palettes (+) et (-), et inversement pour passer du mode manuel au mode automatique. Pour discriminer un appui court par rapport à un appui long, lorsqu'on appuie sur la palette, un contacteur ou autre, par exemple, passe de l'état (0) à l'état (1), ce qui correspond à un front montant. Lorsque l'on relâche la palette, on détecte un front descendant. Par exemple, si un appui sur la palette dure 20 millisecondes, le front descendant correspond à un changement de rapport. Par contre, si cet appui dure, par exemple, plus d'une seconde et après relâchement, le changement de mode est détecté.

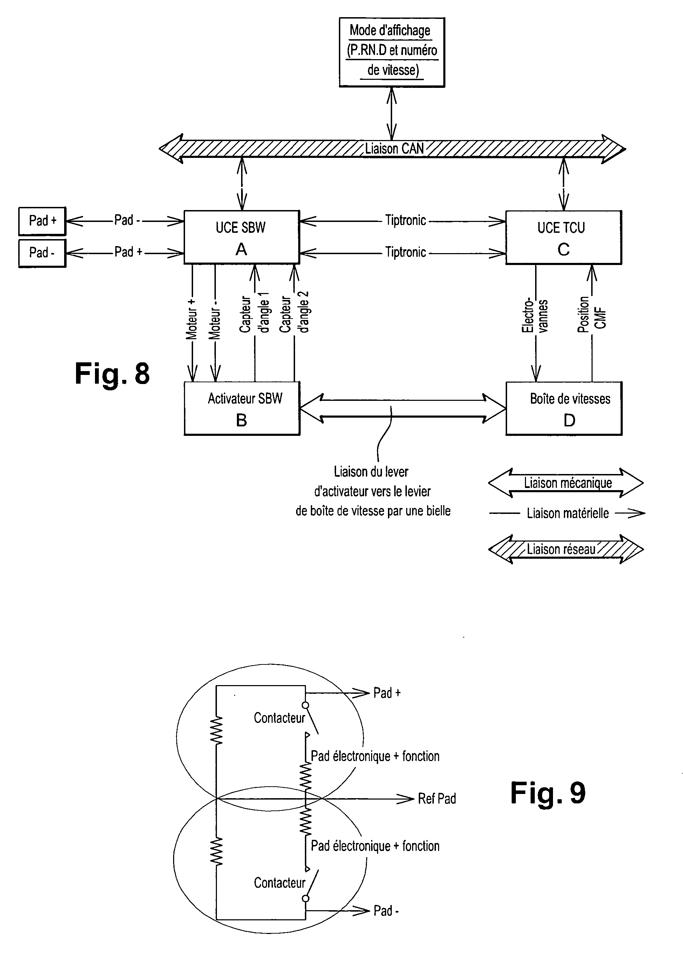

Le grafcet de la figure 8 montre l'architecture d'un véhicule avec une sélection des modes (P), (R), (N), (D) en boîte automatique et en mode manuel, avec montée et descente des rapports, à partir des palettes (P1+) et (P1-). Dans ce schéma, (A) représente l'unité de contrôle électronique avec l'actionneur SBW (B) et (C) le calculateur de boîte de vitesse, laquelle boîte est représentée par (D). Les informations multiplexées circulant sur le bus (CAN) sont essentiellement le régime du moteur, la vitesse du véhicule, le rapport engagé (1 à n) pour une boîte de (n) vitesses, le mode sélectionné (Park (P), Reverse (R), Neutre (N), Drive (D), Manuel (M)) et l'appui sur le frein. A noter que ces dispositions sont connues.

Selon l'invention, la sélection des modes (P), (R), (N), (D) et (M), ainsi que le rapport, s'effectue simplement à partir des palettes (+) et (-).

Comme le montre la figure 9 et dans une forme de réalisation simplifiée, la palette (+) (P1) utilise la mise en parallèle de deux résistances (R1) et (R2), tandis que la palette (-) utilise la mise en parallèle de deux résistances (R3) et (R4), afin de modifier la tension analogique de l'unité centrale de contrôle traitant l'information des palettes. Ainsi, la résistance équivalente de la palette (+) est égale à :

$$\frac{R1.R2}{R1 + R2}$$

tandis que la résistance équivalente de la palette (-) est

égale à :

$$\underline{R3.R4}$$

$$R3 + R4$$

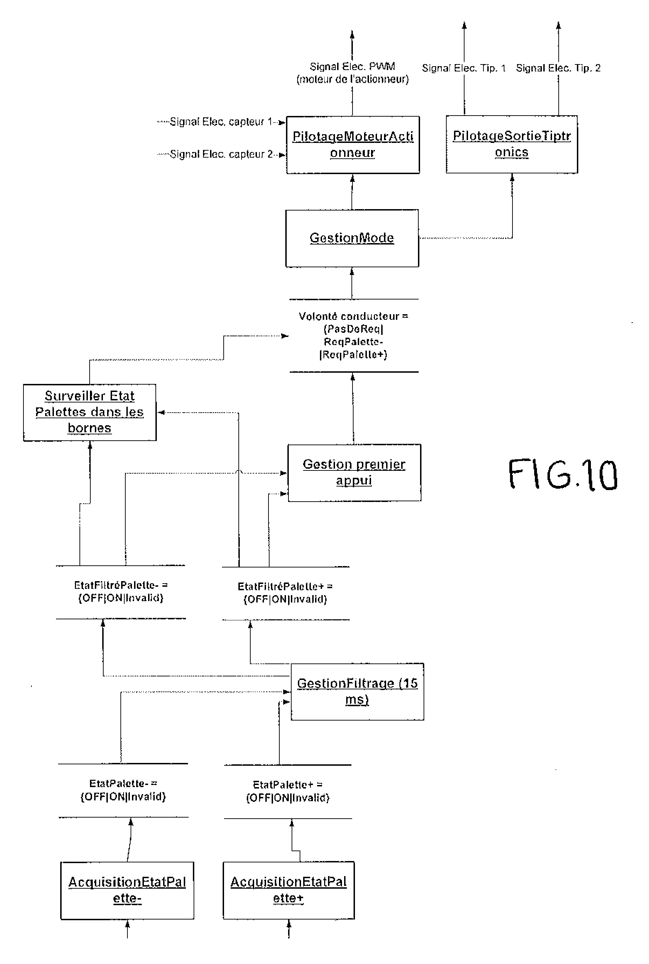

On renvoie à l'algorithme de la figure 10 qui montre la stratégie d'acquisition de la décomposition fonctionnelle. La fonction, gestion premier appui, a pour objectif de gérer des appuis simultanés sur les palettes, tandis que la fonction, surveiller état palette sur les bornes, a pour objectif de surveiller que les valeurs de la palette (+) et de la palette (-) sont dans des zones valides « on » ou « off » et pas invalides. Les stratégies pour gérer ces deux fonctions s'effectuent sur le front montant et non plus sur le front descendant, comme indiqué précédemment, afin de ne pas affecter la durée d'impulsion.

Comme le montre la figure 12, la gestion des appuis palettes s'effectue par l'intermédiaire d'un micro contrôleur. Ce microcontrôleur (4) a pour fonction d'acquérir des signaux des boutons (palette (+), palette (-) auto/manuel verrouillage/déverrouillage), de gérer l'ordre d'apparition des appuis, et de gérer la sortie PWM. Le microcontrôleur (4), relié à la masse et à une source d'alimentation de 5V par exemple, présente par conséquent 4 entrées analogiques ou tout ou rien, une sortie PWM, un oscillateur via RC interne. A noter que les boutons peuvent être remplacés par des bilames ou des capteurs à Effet Hall.

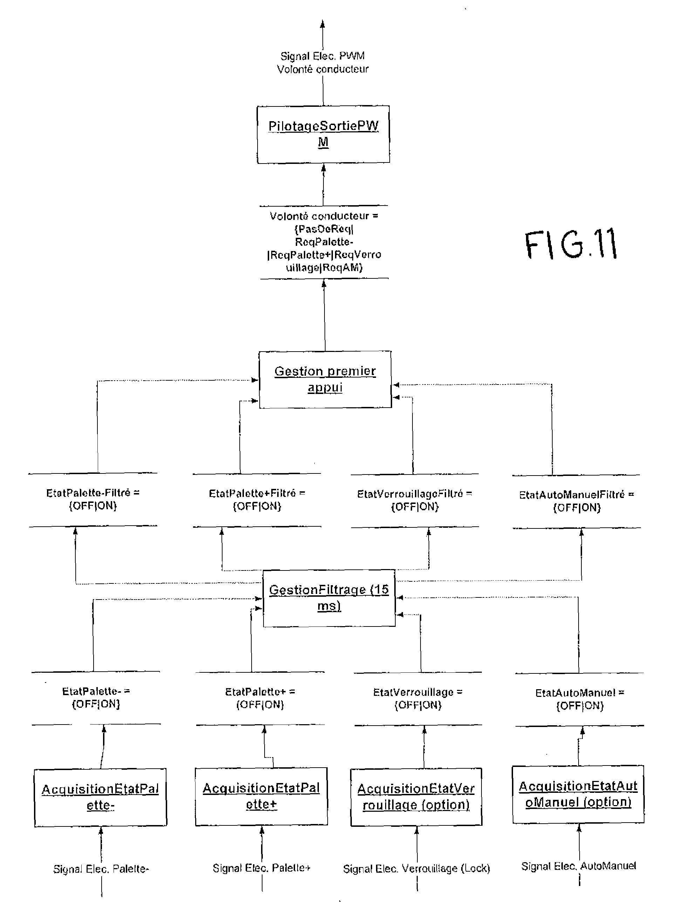

L'algorithme de la figure 11 montre la stratégie d'acquisition des palettes. Comme précédemment, la fonction gestion premier appui a pour objectif de gérer les appuis simultanés sur les palettes ou boutons verrouillage/déverrouillage ou bouton automatique/manuel. Comme précédemment, la stratégie pour gérer cette fonction, s'effectue à partir du front montant.

Bien évidemment, le fonctionnement de la boîte pilotée en tant que telle demeure réalisé à la façon classique parfaitement connue pour un homme du métier en combinaison avec des électrovannes, moteur, ou autres, et par des liens mécaniques, tels que biellettes pour la sélection des états Park, Reverse, Neutre et Drive.

Les avantages ressortent bien de la description, en particulier on souligne et on rappelle la possibilité de commander une boîte de vitesses pilotée à partir d'un seul organe de manoeuvre (palette, levier, ...), lequel organe permet, après avoir sélectionné le mode manuel ou automatique, soit de monter et descendre les vitesses (mode manuel), soit d'obtenir l'état désiré Park, Reverse, Neutre et Drive, par de simples impulsions exercées sur les organes. Avantageusement, cet organe de manoeuvre unique est constitué par des palettes disposées au niveau du volant permettant de totalement dégager l'espace au niveau du poste de pilotage, tout en permettant au conducteur d'avoir toujours les mains positionnées sur le volant.

## Revendications

1. Dispositif de commande d'une boîte de vitesses pilotée pour véhicule automobile assujettie à un calculateur et à une unité de contrôle électroniques pour passer, à volonté, d'un mode manuel selon lequel on monte ou on descend les vitesses en agissant sur un organe de manoeuvre (P1) - (P2), à un mode automatique pour l'engagement des positions Park (P), Reverse (R), Neutre (N), Drive (D) au moyen dudit organe,
   **caractérisé en ce qu'**il comprend des moyens assujettis audit organe de manoeuvre (P1) - (P2), pour permettre, d'une part, de sélectionner le mode manuel ou le mode automatique à partir dudit organe (P1) - (P2), sous l'effet de simples impulsions exercées sur ledit organe et, d'autre part, dans le mode de fonctionnement sélectionné, déterminer les différents états toujours sous l'effet de simples impulsions à savoir, pour le mode manuel, monter et descendre des vitesses et, pour le mode automatique, engagement des positions (P), (R), (N), (D).

2. Dispositif selon la revendication 1, **caractérisé en ce que** l'organe de manoeuvre est constitué par des palettes (+) et (-) disposées au niveau du volant.

3. Dispositif selon la revendication 1, **caractérisé en ce que** l'organe de manoeuvre est constitué par un levier (+) et (-).

4. Dispositif selon l'une quelconque des revendications 1 à 3, **caractérisé en ce que** l'organe de manoeuvre est combiné avec un bouton (1) permettant de sélectionner le mode manuel ou le mode automatique.

5. Dispositif selon l'une quelconque des revendications 1 à 4, **caractérisé en ce que** l'organe de manoeuvre est combiné avec un bouton (2) permettant de verrouiller ou non un état correspondant à une position Park.

6. Dispositif selon les revendications 1 et 4, dans le cas d'une boîte de vitesses comprenant, en mode automatique, une position Park, une position Reverse, une position Neutre et au moins une position Drive et un bouton Auto/Manuel,
   **caractérisé par** les différentes étapes relevant du schéma fonctionnel illustré figure 3 et selon lesquelles l'état (-2) correspond à la position boîte automatique pilotée en Park, l'état (-1) correspond à la position boîte pilotée en Reverse, l'état (0) correspond à la position boîte pilotée en Neutral, l'état (+n) correspond à la position boîte pilotée en Drive avec (+n) rapport sélectionné, l'appui sur bouton Auto/Manuel permettant de passer de l'état Drive mode automatique au mode Manuel, et inversement.

**7.** Dispositif selon les revendications 1 et 4, dans le cas d'une boîte de vitesses comprenant, en mode automatique, une position Park, une position Reverse, une position Neutre et au moins une position Drive et un bouton Auto/Manuel, **caractérisé par** les différentes étapes relevant du schéma fonctionnel illustré figure 4 et selon lesquelles l'état (-1) correspond à la position boîte automatique pilotée en Reverse, l'état (0) correspond à la position boîte automatique pilotée en Neutral ou Park, l'état (+n) correspond à la position boîte automatique pilotée en Drive avec (+n) rapport sélectionné, la sortie de Park étant effectuée par un appui sur le frein et un appui (+) ou (-) sur l'organe de manoeuvre, l'entrée de Park se faisant à l'extinction du véhicule dans un état de maintien de l'alimentation de l'unité de contrôle, l'appui sur bouton Auto/Manuel permettant de passer de l'état Drive mode automatique au mode Manuel, et inversement.

**8.** Dispositif selon les revendications 1, 4 et 5, dans le cas d'une boîte de vitesses comprenant, en mode automatique, une position Park, une position Reverse, une position Neutre et au moins une position Drive et un bouton Auto/Manuel, et équipée d'un bouton de verrouillage et déverrouillage de la position Park, **caractérisé par** les différentes étapes relevant du schéma fonctionnel illustré figure 5 et selon lesquelles l'état (-1) correspond à la position boîte automatique pilotée en Reverse, l'état (0) correspond à la position boîte automatique pilotée en Neutral ou Park, l'état (+n) correspond à la position boîte automatique pilotée en Drive avec (+n) rapport sélectionné, la sortie de Park étant effectuée par un appui sur le frein et un appui (+) ou (-) sur l'organe de manoeuvre ou appui sur le frein et un appui sur le bouton de verrouillage/déverrouillage, l'entrée en Park se réalisant par un appui sur le bouton verrouillage que ce soit en mode Manuel ou en mode Automatique, l'appui sur bouton Auto/Manuel permettant de passer de l'état Drive mode automatique au mode Manuel, et inversement.

**9.** Dispositif selon la revendication 1 dans le cas d'une boîte de vitesses comprenant, en mode automatique, une position Park, une position Reverse, une position Neutre et au moins une position Drive, **caractérisé par** les différentes étapes relevant du schéma fonctionnel illustré figure 6 et selon lesquelles l'état (-2) correspond à la position boîte automatique pilotée en Park, l'état (-1) correspond à la position boîte pilotée en Reverse, l'état (0) correspond à la position boîte pilotée en Neutral, l'état (+n) correspond à la position boîte pilotée en Drive avec (+n) rapport sélectionné, étant donné qu'il n'y a pas de bouton Auto/Manuel, le passage du mode automatique à manuel se réalise dès qu'il y a un appui sur l'organe de manoeuvre alors que la boîte de vitesses se trouve en position Drive (+n), ladite boîte restant en mode manuel tant que le dernier rapport n'est pas sélectionné.

**10.** Dispositif selon la revendication 1 dans le cas d'une boîte de vitesses comprenant, en mode automatique, une position Park, une position Reverse, une position Neutre et au moins une position Drive, **caractérisé par** les différentes étapes illustrées figure 7 et selon lesquelles l'état (-1) correspond à la position boîte automatique pilotée en Reverse, l'état (0) correspond à la position boîte automatique pilotée en Neutral ou Park, l'état (+n) correspond à la position boîte automatique pilotée en Drive avec (+n) rapport sélectionné, la sortie de Park étant effectuée par un appui sur le frein et un appui (+) ou (-) sur l'organe de manoeuvre, à l'extinction du véhicule dans un état de maintien de l'alimentation de l'unité de contrôle, étant donné qu'il n'y a pas de bouton Auto/Manuel, le passage du mode automatique position Drive à manuel et inversement, se réalise dès qu'il y a un appui long sur l'organe de manoeuvre.

**11.** Dispositif selon la revendication 1, **caractérisé en ce que** l'organe de manoeuvre utilise la mise en parallèle de deux résistances pour les impulsions (+) et des deux autres résistances pour les impulsions (-), afin de modifier la tension analogique de l'Unité de Contrôle traitant l'information des états.

**12.** Dispositif selon la revendication 1, **caractérisé en ce qu'**il comprend un microcontrôleur présentant quatre entrées analogiques ou numérique (tout ou rien) pour acquérir les signaux de bouton Manuel/Automatique et verrouillage/déverrouillage et de gérer l'ordre d'apparition des impulsions sur l'organe de manoeuvre et de gérer une sortie PWM, et un oscillateur via RC interne.

**13.** Procédé d'acquisition des informations de l'organe de manoeuvre selon la revendication 1, **caractérisé par** les différentes étapes relevant de l'algorithme illustré figure 10.

**14.** Procédé d'acquisition des informations de l'organe de manoeuvre selon la revendication 1, **caractérisé par** les différentes étapes relevant de l'algorithme illustré figure 11.

## Fig. 1

P₂     P₁

−    +

1
Auto/
Manuel

2
Verrouiller/
Déverrouiller

<——— Poussée Pad - ———
——— Poussée Pad + ———>

| -2- | -1- | -0- | -1- | -2- | -3- | -4- | -5- | -6- |
|-----|-----|-----|-----|-----|-----|-----|-----|-----|

Stationnement   Marche arrière   Point mort          Marche

## Fig. 2

Alimentation électrique 5V

Masse

4

Circuit ASIC ou microcontrôleur

Signal de modulation d'impulsion en durée qui indique la poussée des pads, la poussée auto/manuel et la poussée Verrouiller/ Déverrouiller

Bouton Pad +

Bouton Pad -

Bouton Auto manuel

Bouton Verrouiller déverrouiller

## Fig. 12

FIG.3

FIG.4

FIG.5

FIG.6

FIG.7

**Fig. 8**

Mode d'affichage
(P.RN.D et numéro
de vitesse)

Liaison CAN

Pad + — Pad - — UCE SBW A — Tiptronic — UCE TCU C
Pad - — Pad + —

Moteur + / Moteur - / Capteur d'angle 1 / Capteur d'angle 2

Electro-vannes / Position CMF

Activateur SBW B — Boîte de vitesses D

Liaison du lever
d'activateur vers le levier
de boîte de vitesse par une bielle

Liaison mécanique
Liaison matérielle
Liaison réseau

Pad +
Contacteur
Pad électronique + fonction
Ref Pad
Pad électronique + fonction
Contacteur
Pad -

**Fig. 9**

FIG.10

FIG.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1180618 A